# EUROPEAN PATENT APPLICATION

(11) **EP 4 440 118 A1**
(43) Date of publication of application: **02.10.2024**
(21) Application number: 23305470.9
(22) Date of filing: 31.03.2023
(51) Int. Cl.: H04N 21/2343, H04N 21/845

(54) **METHOD AND SYSTEM OF PLAYING VIDEO STREAMS ACCORDING TO A CURRENT ORIENTATION OF A DEVICE'S SCREEN**

(71) Applicant: Beijing Xiaomi Mobile Software Co., Ltd., Beijing 100085 (CN)
(72) Inventor: THOMAS, EMMANUEL, 2611WD Delft (NL); Potetsianakis, Emmanouil, 2563 TZ The Hague (NL)
(74) Representative: RVDB Rennes

(57) **Abstract**

The present application relates to a method of playing video streams according to a current orientation of a device's screen, wherein the method comprises:
- obtaining (410) a set of first video streams, each first video stream being associated with an intended screen orientation and each first video stream can be decoded by decoding means of the device;
- obtaining (420) a set of second video streams from the set of first video streams, each second video stream being a first video stream whose associated intended screen orientation suits the current orientation of the device's screen;
- selecting (430) one second video stream from the set of second video streams based on device characteristics and/or decoding preferences;
- playing (440) the selected second video stream.

## Description

### FIELD

The present application generally relates to playing video streams according to a current orientation of a device's screen. Particularly, but not exclusively, the present application concerns playing video streams according to a current orientation of a device's screen that changes when the device's screen is rotated.

### BACKGROUND

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

Dynamic Adaptative Streaming over HTTP (DASH) (ISO/IEC 23009-1 Dynamic adaptive streaming over HTTP (DASH) - Part 1: Media presentation description and segment formats, https://standards.iso.org/ittf/Publicly A vailableStandards/c083314_ISO _I EC% 2023009-1 _2022(en).zip) is a media streaming standard for streaming media content over HTTP in a bandwidth-adaptive manner, which the general concept is known as HTTP-based Adaptation Streaming (HAS). Other media streaming technologies beside DASH exist which can be standardized, proprietary or a mix thereof. At this date, the two main media streaming technologies that are commercially deployed are MPEG-DASH standardized by the MPEG Systems ISO Working Group and the Apple HTTP Live Streaming (HLS) defined by Apple.

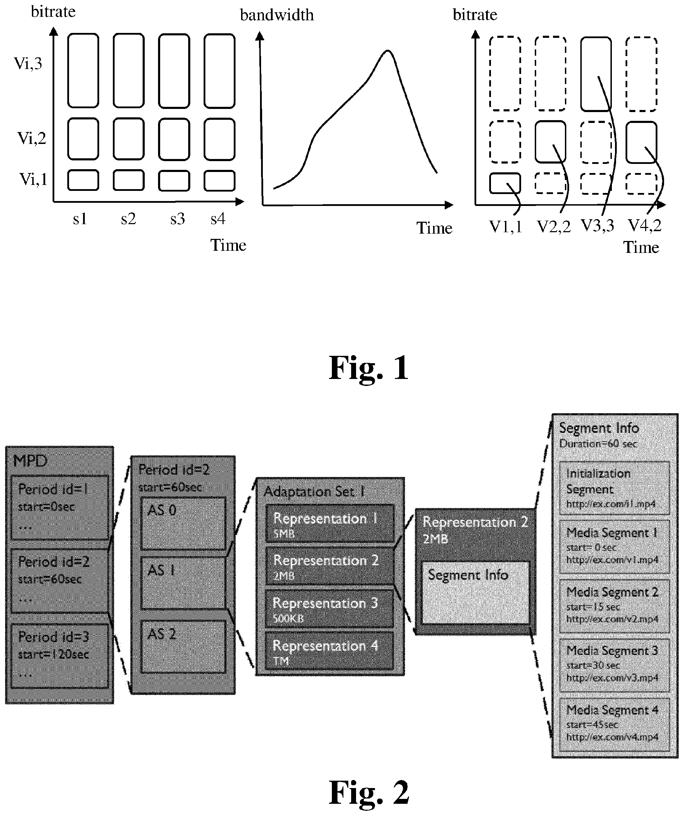

**Figure 1** shows schematically an example of media streaming application for streaming media content over HTTP in a bandwidth-adaptive manner (HAS).

HAS's goal is to distribute media content, typically audio and video but other related content such as subtitles, using the internet infrastructure. To this end, HAS leverages the HTTP protocol to deliver the media content from an HTTP server hosting the media content to an HTTP client seating in the receiving client. A key benefit of HTTP servers is that HTTP server can act as a cache, that is an HTTP server which hosts a given resource and whenever an HTTP client requests the same resource, the HTTP server can serve the requested resource again, provided that this HTTP request is legitimate and valid. In case the requested resource is not on the HTTP server, this HTTP server will typically fetch the resource from another HTTP server which can be another cache or simply the original source of the content also called the origin server.

HAS thus relies on HTTP protocol to deliver the media content from a server to a client. However, it is not convenient to send an entire media resource, say a full encapsulated movie, to a client if the client will abort the playback after few seconds. Therefore, HAS implies that the media content to be distributed is segmented in portions of several seconds, typically ranging from 2s to 10s, depending on the service requirements. Those portions are commonly called segments in DASH, sometimes chunks in other HAS variants. In **Figure 1****,** segment positions on the media timeline (timeline of the media content) are referenced as s1 to s4. For those four positions, there exist one or more available segments

In addition, the HTTP protocol is stateless which means that the HTTP server has no knowledge of the video played current state, e.g. in terms of playback rate, available bandwidth etc. Instead, HAS follows a client-driven paradigm as opposed to a server-driven one. In HAS, the client is in control of the media playback (start, pause, stop, fast forward, rewind) and the choice of the media content to playback (video resolution, audio language, etc..). As a result, the HAS client has to know what content is available and where to retrieve it. To address this, HAS defines the concept of a manifest file which typically is a text file containing a description of the media content, in terms of video/audio codec, resolution, etc. as well as the URLs (Wikipedia contributors, "URL," Wikipedia, The Free Encyclopedia, https://en.wikipedia.org/w/index.php?title=URL&oldid=114200 0987 (accessed March 3, 2023) of the segments collectively constituting each available media content. With this information, a HAS client can perform a socalled content selection logic at the beginning of the media playback, that is selecting a media content that is supported (e.g. codec support, resolution support, etc.) as well as meeting the user's preference (e.g. language selection).

Content selection based on the manifest file is thus the first operation of the media playback which a HAS client executes. However, HTTP, and namely the underlying TCP protocol used in HTTP/1.1 and HTTP/2, is known to give varying performance since it is best effort. That is, the data throughput that the HTTP client can observe may vary every second depending on various aspects, e.g. congestion/interference in the home network, congestion in the ISP core network, congestion in peering network, overload of the content provider's server etc. As a result, it is key for an HAS client to be able to adjust the bitrate of the media content it downloads such that the playback buffer can grow quickly (fast start-up) and doesn't stop during playback (no rebuffering/stalling). Playback stall is known in the field to be the event degrading the most the Quality of Experience (QoE) of a user. As a result, HAS not only provides media segments for each content but also provides those segments for the same content in different encoded versions. Those different versions correspond to different bitrates, i.e. amount of encoded data per unit of time, and those different bitrates correlate with the minimum bandwidth that a HAS client must have in order to sustain a stable playback without running out of data to present to the user. As a side note, when a HAS client runs out of data in the segment buffer, this situation is known as buffer starvation in the field. With those different encoded-version segments, the HAS client is able to request a segment with a higher or lower bitrate in order to maximize the QoE given the available bandwidth over time. This mechanism is called content adaptation.

In **Figure 1****,** the manifest file indicates that three encoded versions Vi,j (j=1 to 3) of each segment position si (i=1 to 4) are available. For the first segment position s1, the low encoded version V1,1 is selected because the bandwidth is low. For the second segment position s2, the medium encoded version V2,2 is selected because the bandwidth is medium. For the third segment position s3, the high encoded version V3,3 is selected because the bandwidth is high. For the fourth segment position s4, the medium encoded version V4,2 is selected because the bandwidth is medium.

The art of reaching the maximum of QoE is heavily studied and different techniques exist, some are based on the measurement of the available bandwidth, other monitor the segment media data buffer (media data coming from the segments) fullness.

HAS is thus a general streaming concept and MPEG-DASH is one example of it.

A MPEG-DASH client downloads or has been provided with a Media Presentation Descriptor (MPD) (generically called manifest file in HAS as mentioned before).

**Figure 2** shows schematically an MPD hierarchical data model in accordance with the MPEG-DASH.

In an MPD the content is contained in one or more Period elements that indicate temporal splitting, e.g. add breaks in a first Period then a new Period for the movie. Each Period element contains the description of each media content in the form of an Adaptation Set (AS) element. Different versions of a media content in terms of codec used would correspond to different Adaptation Set element. An Adaptation Set (AS) element has thus typically a specific media type, e.g. an Adaptation Set element is the video content of a movie and another Adaptation Set element can be the different audio tracks of this movie. In a less common scenario, both audio and video content can be part of the same Adaption Set although less common in current video services since it does not allow per-user personalization. Each Adaptation Set element can be encoded in multiple resolutions and bitrates called the Representations (Representations correspond to Vi,j where j is a given Representation and i is all segment position, 1 to 4, in Figure 1). Those Representations also contain the segment information and the segment information contain Initialization Segment and Media Segments that determine the URL of an initialization media content and the URLs of different media contents of this Representation along the Period (Sodagar, I. (2011). The mpeg-dash standard for multimedia streaming over the internet. IEEE multimedia, 18(4), 62-67. https://www.bogotobogo.com/VideoStreaming/images/mpeg_dash/DASH-IEEE-multimedia-preprint.pdf).

With the advent of HAS around the year 2012 with MPEG-DASH, streaming media over the internet became a commodity and no longer limited to tailormade services.

While the first video services targeted computer and then TV, the more recent services heavily rely on mobile devices for their consumption. One of the key properties of mobile devices compared to computer screens and TV is that the user can use a mobile device either oriented vertically or horizontally. In addition, a user may rotate the device while watching a video in order to be more comfortable which a TV user cannot (to the best of our knowledge, only one or two TV models only were released with a rotating screen). Also, a user may start watching a video on a mobile vertically but decide to continue on a TV where the aspect ratio thus change from vertical to horizontal. An aspect ratio of a screen is a ratio of its width over its height. Horizontal screens correspond to aspect ratio greater than 1 and vertical screens correspond to aspect ratio lower than 1. Square screens correspond to aspect ratio equal to 1:1.

In addition, some content providers aims at both targeting computer/TV and mobile devices consumption with the same source content, e.g. TV program.

For all those reasons, producing and streaming to the user a video content only in horizontal orientation (landscape) or vertical orientation (vertical) no longer suit the needs of the user which expects a high QoE. QoE may be highly degraded when a user watches a video horizontally but the video has been produced in a vertical aspect ratio or vice versa. In this case, a significant part of the device display will display back bars.

This is the reason why several video editing software allow to produce a video in several aspect ratios, vertical, horizontal but nowadays also square.

For content producers, say TV networks, they more and more release their shows on video servicers/social networks which are viewed on mobile devices. They typically produce a version of their TV program in vertical and/or square aspect ratio.

While producing video in different formats may address the issue of content selection, i.e. selecting a content that suits the device's state at start time, this fails to address the case where the user rotates the device while watching a video. Indeed, in this case the user would expect no interruption in the viewing experiences and the best QoE while watching in the new orientation.

In the patent application US20180014049A1, Griffin proposes a method to select a video that suits the viewing orientation of a user's screen.

In one embodiment, Griffin discloses that the video content may be produced in segments as in HAS. Next, when the video player consumes a current video segment i.e., the video player is an HAS client, an orientation of the user's screen is detected, a next video segment having an aspect ratio corresponding to the detected orientation is requested, the video player presentation is updated to match the detected orientation and the next video segment is played.

In the Griffin's method, a first video is thus filmed and formatted in a first aspect ratio optimized for a first orientation of a video streaming device (e.g., a landscape orientation) and a second video is filmed and produced in a second aspect ratio optimized for a second orientation of a video streaming device (e.g., a portrait orientation)" and then the video player application plays the requested video segment having the aspect ratio corresponding to the detected orientation.

It can be understood in Griffin's method that the video player selects a video whose aspect ratio (e.g., 16:9) matches the aspect of the mobile service screen (e.g. 16:9 or similar horizontal aspect ratio).

Several shortcomings of the Griffin's method can be observed.

First, because the selection of video segment during playback is done based on the "correspondence" of the aspect ratio of the video and the screen orientation, the decision made by the video player may not match the intention of the content producer. Indeed, when a video aspect ratio does not match exactly the aspect ratio of a screen, the video player has to put black bars, either vertically or horizontally. Other technique would crop or stretch the video to fill up the display surface of the screen. All those alterations may not be desired by the content producer.

Second, there typically exist two aspect ratios: the display aspect ratio (DAR) which is the ratio that the image/video has to be displayed with and the sample aspect ratio (SAR)/pixel aspect ratio (PAR) which is the aspect ratio which the video/image has been encoded with. These two aspect ratios definition for video can confuse the selection logic of the device and leads to wrong selection of video.

Third, some video sequences may be encoded in a different orientation at they are meant to be displayed. This is done typically on smartphones while even if the smartphone records vertically the video is encoded as horizontal. Then there is metadata in the video file or the video bitstream itself to tell the video player to rotate the video at display. The point here is that the aspect ratio of the encoded video may again lead to inappropriate content selection.

More problematic is the handling of the square aspect ratio (1:1), should it be selected by vertical or horizontal viewing orientation? It is typically expected by streaming services that square videos are to be watched on vertically oriented device but the orientation selection as stated by Griffin will indistinguishability select a square video when viewed vertically and horizontally, or worse-case scenario Griffin's solution fail to come up with a decision for square aspect ratio.

Therefore, there is a need in the field for content provider to ensure video produced in specific aspect ratio and watched in the intended viewing orientation based on information provided by the content producer. In addition, there is also a need to enable this during playback of the video when changes of viewing orientation can occur. Dynamically switching between those different video needs to happen seamlessly, i.e., no gap in the video content timeline, and in a way that does not disturb the viewer. Ideally, the switch of video content should then occur in the lapse of time needed for the user to go from one viewing orientation to another and for the mobile device to update the display based on this event.

The well-known methods, such as the Griffin's method, involve an issue of a poor QoE for user when a watched video stream is not displayed with the intended screen orientation as defined by the content creator.

At least one exemplary embodiment of the present application has been devised with the foregoing in mind.

### SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of playing video streams according to a current orientation of a device's screen, wherein the method comprises:
- obtaining a set of first video streams, each first video stream being associated with an intended screen orientation and each first video stream can be decoded by decoding means of the device;
- obtaining a set of second video streams from the set of first video streams, each second video stream being a first video stream whose associated intended screen orientation suits the current orientation of the device's screen;
- selecting one second video stream from the set of second video streams based on device characteristics and/or decoding preferences;
- playing the selected second video stream.

The method according to the present application avoids unreliable content selection based on comparing aspect ratio of video (unclear which type) and aspect ratio of screen. Difficult case are for instance, what is the best video between portrait and landscape for a square screen and similarly, what is the appropriate screen orientation for a square video, portrait, landscape, square?

Even more, the method according to the present application decouples aspect ratio of video and screen altogether. In other words, a given video in a given aspect ratio is not by essence meant to be watched on a certain screen orientation but only the annotation of the content creator's intent determines the appropriate screen orientation. For instance, a square video may be intended for vertical orientation in certain cases and limited to square screens in other cases.

The method according to the present application provides high level of QoE for the user by watching video produced with the intended screen orientation as defined with the content creator. No mismatch like watching a square video on a TV which typically is only for vertical oriented screens.

Service provider can deliver a same manifest file with different aspect ratio to more devices without the risk for player to select the wrong video stream. This improves caching efficiency; fewer files on the server.

User can seamlessly switch from mobile watching to TV watching, by continuing consuming the same manifest file (assuming sharing mechanism exist between devices). This corresponds to the case where screen orientation changes because the user decides to watch the content on a different device, e.g. mobile device to TV, smart watch to mobile device, etc.. all combinations are possible.

Alternative solutions like cropping the source video to a new aspect ratio may lead to degraded QoE for the user. In the present application, video are created specifically for each orientation and the content creator may reframe them at the production stage to provide the same high level of QoE that simple cropping would not achieve. Cropping may also remove information such as burned-in logos. By producing those videos separately, those important overlays are not lost.

In one exemplary embodiment, the method further comprises requesting the current device's screen orientation.

In one exemplary embodiment, the selected second video stream is a second video stream of the set of second video streams having a minimal difference between its aspect ratio of its dimensions and the aspect ratio of the dimensions of the device's screen.

In one exemplary embodiment, the method further comprises:
- obtaining a new orientation of the device's screen that is different of the current orientation of the device's screen;
- obtaining a set of third video streams from the set of first video streams, each third video stream being a first video stream whose associated intended screen orientation suits the new orientation of the device's screen;
- selecting one third video stream from the set of third video streams based on device characteristics and/or decoding preferences;
- switching to the selected third video stream at a new switching point and playing the selected third video stream.

In one exemplary embodiment, switching to the selected third video stream at a new switching point and playing the selected third video stream are executed if the selected third video stream is different of the selected second video stream. Otherwise the selected second video stream is played.

In one exemplary embodiment, the set of first video streams is obtained from a manifest file describing at least two alternative first video streams of a same video content, the at least two alternative video streams being produced with different intended screen orientation.

In one exemplary embodiment, an intended screen orientation suits a current or new landscape orientation of the device's screen when the intended screen orientation is a landscape orientation, an intended screen orientation suits a current or new portrait orientation of the device's screen when the intended screen orientation is a portrait orientation, an intended screen orientation suits a current or new orientation of the device's screen defined for a square screen when the device has a square screen.

In one exemplary embodiment, the method further comprises parsing a syntax structure of a manifest file to obtain an intended screen orientation associated with a first video stream.

In one exemplary embodiment, the syntax structure, is either an attribute of an Adaptation Set element of a Media Presentation Descriptor or an Essential Property within an Adaptation Set element of a Media Presentation Descriptor.

In one exemplary embodiment, the syntax structure may be used by either a HTTP-based Adaptation Streaming (HAS) client or by a Dynamic Adaptative Streaming over HTTP (DASH) client.

A HAS client is a device configured to support HTTP-based Adaptation Streaming (HAS) and a Dynamic Adaptative Streaming over HTTP (DASH) client is a device supporting Dynamic Adaptative Streaming over HTTP (DASH).

In one exemplary embodiment, obtaining the new orientation of the device's screen that is different of the current orientation of the device's screen comprises transmitting said new orientation of the device's screen to a remote device and receiving video streams to be played from said remote device.

According to a second aspect of the present application, there is provided a manifest file formatted to include intended screen orientations associated with a set of first video streams used by a method according to the first aspect of the present application for playing one of said first video stream.

According to a third aspect of the present application, a computer program product including instructions which, when the program is executed by one or more processors, causes the one or more processors to carry out a method according to the first aspect of the present application.

According to a fourth aspect of the present application, there is provided a non-transitory storage medium (or storing medium) carrying instructions of program code for executing any one of the methods according to the first aspect of the present application.

According to a fifth aspect of the present application, there is provided a video streaming device comprising:
- a screen ;
- an orientation sensor intended to obtain a current orientation of the screen and to detect a change of said screen orientation ;
- means for receiving streamed video segments of video streams; and
- means for performing the method according to the first aspects of the present application.

In one exemplary embodiment, the means for performing the method according to the first aspects of the present application are embedded in a remote device and the video streaming device further comprises means for transmitting orientation of its screen to said remote device and for receiving video streams to be played from said remote device.

According to a sixth aspect of the present application, there is provided a system of playing a video stream according to a current orientation of a device's screen, wherein the system comprises:
- a video streaming device according to the fifth aspect of the present application ; and
- a video streaming server comprising means for storing video segments of video streams.

The specific nature of at least one of the exemplary embodiments as well as other objects, advantages, features and uses of said at least one of exemplary embodiments will become even more apparent from the following description of examples taken in conjunction with the accompanying drawings.

### BRIEF DESCRIPTION OF THE DRAWINGS

Reference will now be made, by way of example, to the accompanying drawings which show exemplary embodiments of the present application, and in which:
**Figure 1** shows schematically an example of media streaming application for streaming media content over HTTP in a bandwidth-adaptive manner (a.k.a. HTTP Adaptive Streaming (HAS));
**Figure 2** shows schematically an MPD hierarchical data model in accordance with the MPEG-DASH standard ;
**Figure 3** shows an example of a system 1 of playing a video stream according to a current orientation of a device's screen in accordance with an exemplary embodiment of the present invention.
**Figure 4** shows a system of delivering video content from a video streaming server to a video streaming device in accordance with an exemplary embodiment of the present invention ;
**Figure 5** shows schematic block diagram of steps of a method of playing video streams according to a current orientation of a device's screen in accordance with at least one exemplary embodiment of the present invention;
**Figure 6** shows a modified MPD in accordance with at least one exemplary embodiment of the present invention;
**Figure 7** shows a modified MPD in accordance with at least one exemplary embodiment of the present invention;
**Figure 8** shows a modified MPD in accordance with at least one exemplary embodiment of the present invention;
**Figure 9** shows a modified MPD in accordance with at least one exemplary embodiment of the present invention;
**Figure 10** shows a schematic block diagram illustrating an example of a system in which various aspects and exemplary embodiments are

### implemented.

Similar or same elements are referenced with the same reference numbers.

### DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

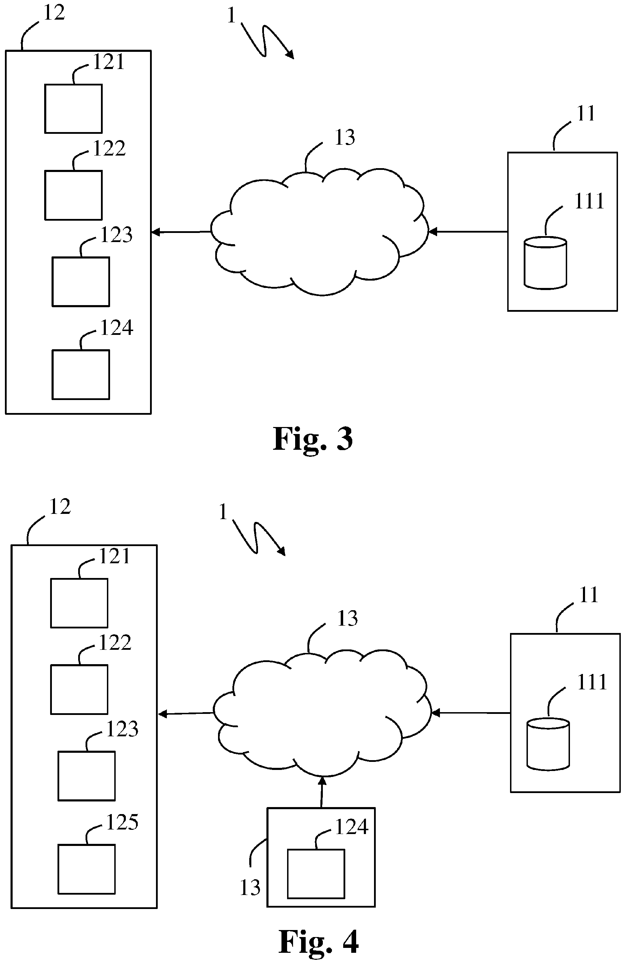

**Figure 3** shows an example of a system 1 of playing a video stream according to a current orientation of a device's screen in accordance with an exemplary embodiment of the present invention.

System 1 comprises a video streaming server 11 and a video streaming device 12.

The video streaming device 12 comprises a screen 121, an orientation sensor 122 intended to obtain a current orientation of the screen 121 and to detect a change of said screen orientation, means 123 for receiving streamed video segments from the video streaming server 11.

The video streaming server 11 delivers video segments of video streams to means 123 of the video streaming device 12 via a communication network 13. The video segments of video streams are stored in a video segment storage 111 located in this example in the video streaming server 11. But, as discussed above, the video segment storage 111 may also be a cache memory embedded in other servers.

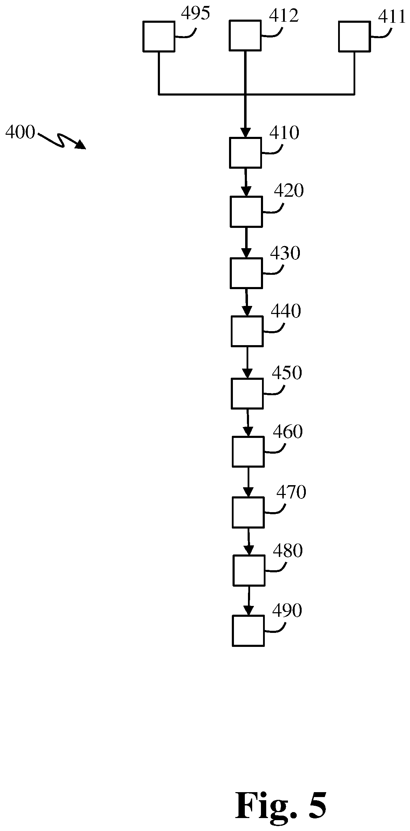

In one exemplary embodiment, illustrated in **Figure 3****,** the video streaming device 12 further comprises means 124 for performing one of the method as described in **Figure 5****.**

In one exemplary embodiment, illustrated in **Figure 4****,** the means 124 are embedded in a remote device 13 and the video streaming device 12 further comprises means 125 for transmitting orientation of its screen to said video streaming device 12 and for receiving video streams to be played from the remote device 13.

For example, the remote device 13 may be a gateway of an edge entity to which the video streaming device 12 is connected.

**Figure 5** shows schematic block diagram of steps of a method 400 of playing video streams according to a current orientation of the screen 121 in accordance with at least one exemplary embodiment of the present invention.

In step 410, means 124 obtain a set of first video streams. Each first video stream is associated with an intended screen orientation and each first video stream can be decoded by decoding means of the video streaming device 12.

In one exemplary embodiment of method 400, in step 411, means 124 request the current orientation of the screen 121.

In one exemplary embodiment of step 410, the set of first video streams is obtained from a manifest file describing at least two alternative first video streams of a same video content, the at least two alternative video streams being produced with different intended screen orientations.

In one exemplary embodiment of step 410, the manifest file is downloaded from a communication network.

In one exemplary embodiment of step 410, the manifest file is obtained from a memory of the video streaming device 12.

In step 420, the means 124 obtain a set of second video streams from the set of first video streams. Each second video stream is a first video stream whose associated intended screen orientation suits the current orientation of the screen 121.

In step 430, the means 124 select one second video stream from the set of second video streams based on device characteristics and/or decoding preferences.

In one exemplary embodiment of step 430, the selected second video stream is a second video stream of the set of second video streams having a minimal difference between its aspect ratio and the aspect ratio of screen 121.

In one exemplary embodiment, the second video streams can be decoded by different decoding means of the video streaming device 12, and wherein a decoding preference indicates which of these decoding means are used to decode the selected second video stream.

Note in step 430, the selection proposed by Griffin may take place, that based on aspect ratio correspondence of the screen 121 and the second video stream. In this case, the risk of miss selection or failure to select (e.g., in case on 1:1) is excluded thanks to step 420 taking place before.

In step 440, the means 124 play the selected second video stream.

In one exemplary embodiment, method 100 further comprises steps 450 to 490.

In step 450, means 124 obtain a new orientation of the screen 121 that is different of the current orientation of the screen 121.

In one exemplary embodiment of step 450, said new orientation of the device's screen is transmitted to the remote device 13 and video streams to be played are received from the remote device 13.

In step 460, means 124 obtain a set of third video streams from the set of first video streams. Each third video stream is a first video stream whose associated intended screen orientation suits the new orientation of the screen 121.

In step 470, means 124 select one third video stream from the set of third video streams based on device characteristics or decoding preferences.

In step 480, means 124 switch to the selected third video stream at a next switching point.

In step 490, means 124 play the selected third video stream.

In one exemplary embodiment, if the selected third video stream is different of the selected second video stream, in step 480, means 124 switch to the selected third video stream at a next switching point and, in step 490, play the selected third video stream. Otherwise, means 124 play the selected second video stream (step 440).

In one exemplary embodiment, method 400 further comprises predicting (step 495) selected second video streams for different orientations of the screen 121, e.g. horizontal and vertical viewing. Said prediction of selected second video streams is done in advance of the playing of a current video stream and the predicted selections are stored in a memory of the video stream device 12.

This exemplary embodiment is advantageous because it leads to a high level of QoE because the video streaming device 12 may then anticipate the fact that a switch will be needed either by video streaming device's rotation or other causes. Then, when means 124 determines that the likelihood of a switch exceed a certain threshold a new video stream may be buffered in parallel to a current played video stream. If the orientation sensor 22 does reflect a rotation of the video streaming device 12, then means 124 are able to play more quickly the new video stream since it already buffered it.

Several prediction techniques may be used, e.g. user behavior analysis, aggregated data over many user behavior when watching a certain video etc.

In one exemplary embodiment, means 124 may reduce the current video playback rate to a rate lower than 1, e.g. 0.7, in a way that the user would not perceive it, thus allowing more time for the new video segments to be retrieved and buffer.

This exemplary embodiment avoids stalling when switching between two video streams.

When available, the switch may happen and the playback rate progressively or not going back to 1. Since a rotation of the video streaming device 12 introduces a disruption in the viewing anyway, it can be that an end-user would not notice if the new video stream starts with a playback rate of 1.0 immediately.

A next occurrence of a switching point varies from one streaming technology to another.

In one exemplary embodiment, a next occurrence of a switching point depends on the way the video streams has been encoded which introduces different frequencies of switching points.

In one exemplary embodiment of step 480, means 124 may also start two decoders and implement a switching logic post decoding at a presentation level which allows to bypass the limitation of switching point occurrences.

In one exemplary embodiment of method 100, an intended screen orientation suits a current or new landscape orientation of the device's screen when the intended screen orientation is a landscape orientation, an intended screen orientation suits a current or new portrait orientation of the device's screen when the intended screen orientation is a portrait orientation, an intended screen orientation suits a current or new orientation of the device's screen defined for a square screen when the device has a square screen.

In one exemplary embodiment of method 400, in step 412, means 124 parse syntax structure of a manifest file to obtain an intended screen orientation associated with the first video stream.

In one exemplary embodiment of step 412, the syntax structure is either an attribute of an Adaptation Set element or an Essential of Supplemental Property within an Adaptation Set element as further discussed below.

In the following, exemplary embodiments of the present invention are described using the MPEG-DASH standard that is by modifying the MPD for content description and the segment format as a well as a JavaScript DASH player leveraging the W3C Screen Orientation API for both content selection and content adaptation. Exemplary embodiments of the present invention are also described using Android API to query a screen orientation via an orientation attribute of a class Configuration.

These exemplary embodiments are given for illustration purpose and do not limit the present invention to MPEG-DASH nor to the W3C Screen Orientation API.

Means 124 can query a current orientation of the screen 121 and receive notifications whenever the orientation sensor 122 detect a change of said screen's orientation.

These notifications exchanged between the orientation sensor 122 and the means 124 can be done through a module of the orientation sensor 122 or via an Application Programming Interface (API) exposed in the operating system of the video streaming device 12.

In one exemplary embodiment, the orientation sensor 122 is implemented as an Android API that allows to query a screen orientation via an orientation attribute of a class Configuration as defined in (Configuration I Android Developers,
https://developer.android.com/reference/android/ co ntent/res/Config u ratio n#o r ientation). The orientation attribute indicates that the screen orientation is undefined (ORIENTATION_UNDEFINED) or the screen orientation is oriented in landscape (ORIENTATION_LANDSCAPE) or in portrait (ORIENTATION_PORTRAIT) or to indicate a square screen orientation (ORIENTATION_SQUARE), i.e. a particular screen orientation when the aspect ratio of the screen equals 1 (same width and height).

In one exemplary embodiment, the orientation sensor 122 implements screen orientations as specified in the W3C specification called "Screen Orientation" (Screen Orientation, W3C Working Draft 15 February 2023, https://www.w3.org/TR/2023/WD-screen-orientation-20230215/) for web browser, screen orientations are defined in the specification entitled Screen orientation types in W3C Screen Orientation API (https://www.w3.org/TR/screen-orientation/#screen-orientation-types) as follows:
- Any The screen can be rotated by the user to any orientation allowed by the device's operating system or by the end-user;
- Default (unlocked); The device's default behavior for when the screen is unlocked (i.e., the active orientation lock is null). This orientation is determined by the device's operating system, or the user agent, or controlled by the end-user, or possibly set by an installed web application. For example, when the screen orientation is unlocked and the user rotates the device, some devices will limit orientation changes to portrait-primary, landscape-primary, and landscape-secondary, but not to portrait-secondary ;
- Landscape: The screen's aspect ratio has a width greater than the height;
- Natural: The most natural orientation for the device's display as determined by the user agent, the user, the operating system, or the screen itself. For example, a device viewed, or held upright in the user's hand, with the screen facing the user. A computer monitor are commonly naturally landscape-primary, while a mobile phones are commonly naturally portrait-primary ;
- Portrait : The screen's aspect ratio has a height greater than the width;
- Primary : The device's screen natural orientation for either portrait or landscape ;
- Secondary : The opposite of the device's screen primary orientation for portrait or landscape.

In addition, the orientation sensor 122 may then run a JavaScript application to listen to change of orientation.

Oher APIs in Android or other operating systems can offer similar capabilities to query and subscribe to changes of the orientation of the screen 121.

Assuming a content producer has made several video versions from a source content as needed for the invention's purpose. Each video version has been made for one or more intended screen orientation.

In order to signal said one or more intended screen orientation, in one exemplary embodiment, the content producer adds metadata in a modified version of the MPD of **Figure 2** for each of those video versions.

As can be appreciated by the skilled person in the art, the Representations in the MPD of **Figure 2** inside a same Adaptation Set element need to be visually equivalent, therefore it is not possible to mix vertical and horizontal video in a same Adaptation Set element. Even more, the Representations inside the same Adaptation Set element are supposed to be used for adapting to bandwidth variations and thus switching from vertical to horizontal aspect ratio while the device is not rotating would be a disastrous QoE for the user. Furthermore, as mentioned earlier, the content creator may end up creating different versions of the same content for vertical and horizontal viewing which makes those versions even less visually equivalent and not suitable for bandwidth content adaption switching.

Therefore, a MPEG-DASH compliant MPD to offer those several video versions to the video streaming device 12 is to create a modified MPD comprising one Adaptation Set element for each of video version. The number of video versions and the process to create them is determined by the content creator itself. Also note that switching between Adaptation Set elements may require added signaling such as the Supplemental Property "urn:mpeg:dash:adaptation-set-switching:2016" defined in the MPEG-DASH standard. For brevity, they may be omitted in MPD examples which follow.

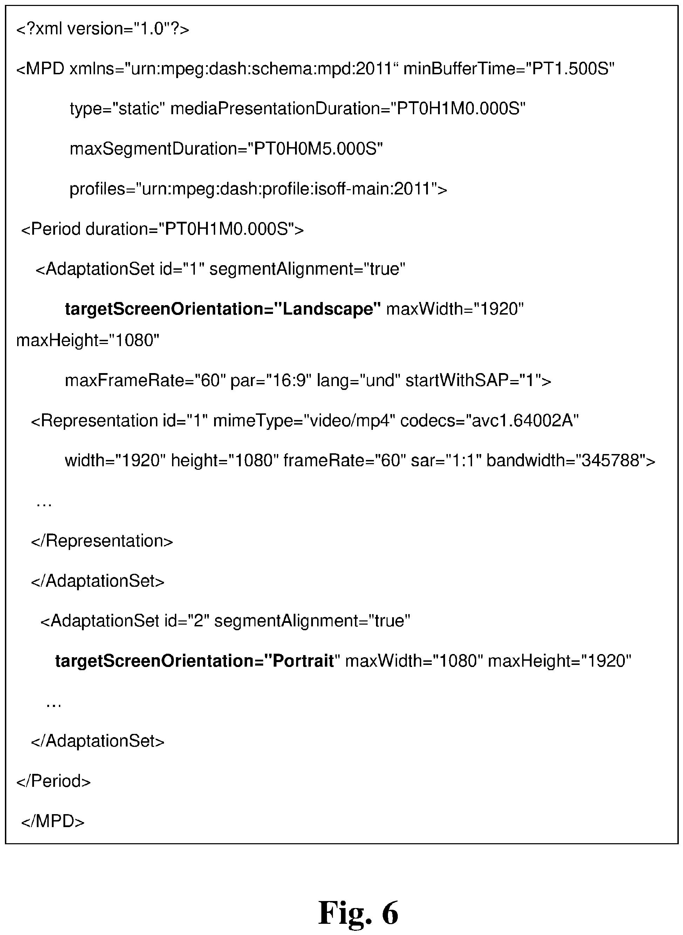

**Figure 6** shows the modified MPD in accordance with an exemplary embodiment of the present invention.

The MPD as currently defined in MPEG-DASH is modified by introducing an attribute **targetScreenOrientation** in the Adaptation Set element.

For example, the attribute **targetScreenOrientation** in an Adaptation Set element specifies a comma-separated list of intended (targeted) screen orientations for displaying the video component of this Adaptation Set element.

For example, the values of the attribute **targetScreenOrientation** are "any", "landscape", "portrait" or "square".

For example, if the attribute **targetScreenOrientation** is not present in an Adaptation set element, the default value is "any" (any screen orientation).

In **Figure 6****,** a first Adaptation Set element with an identifier id equals to 1 corresponds to a video stream with an aspect ratio equals to 1080 rows over 1920 columns (height/width). The attribute **targetScreenOrientation** equals 'Landscape". A second Adaptation Set element with an identifier id equals to 2 corresponds to a video stream with an aspect ratio equals to 1920 rows over 1080 columns (height/width). The attribute **targetScreenOrientation** equals "Portrait".

By adding the attribute **targetScreenOrientation** in an Adaptation Set element of the MPD of **Figure 6****,** in step 412, means 124 parses the modified MPD of a data stream and obtains a set of first video Adaptation Set elements (step 410). Each of the first video Adaptation Set element corresponds to a first video stream. In step 411, means 124 request (queries) the current orientation of the screen 121 to the orientation sensor 122. In step 420, means 124 obtain the set of second video Adaptation Set elements from the set of first video Adaptation Set elements. Each second video stream corresponds to a second video Adaptation Set element. A second Adaptation Set element is a first Adaptation Set element whose attribute **targetedScreenOrientation** value suits the current orientation of the screen 121 or corresponds to adaptation set element whose attribute **targetedScreenOrientation** value equals to "any". In step 430, a second Adaptation Set element is selected from the set of second Adaptation Set elements.

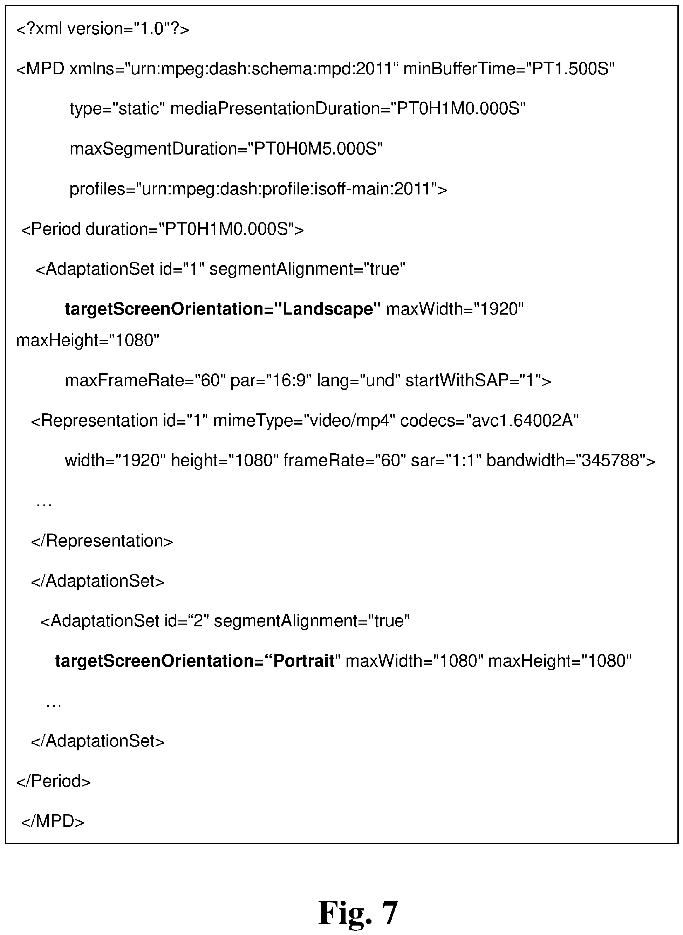

**Figure 7** shows the modified MPD in accordance with an exemplary embodiment of the present invention.

In **Figure 7****,** a first Adaptation Set element with an identifier **id** equals to 1 corresponds to a video stream with an aspect ratio equals to 1080 rows over 1920 columns (height/width). The attribute **targetScreenOrientation** equals 'Landscape". A second Adaptation Set element with an identifier **id** equals to 2 corresponds to a video stream with an aspect ratio equals to 1080 rows over 1080 columns (height/width). The attribute **targetScreenOrientation** equals "Portrait".

In this example, the second Adaptation Set element has a video aspect ratio of 1080x1080, i.e., 1:1 aspect ratio. This aspect ratio is meant for vertical viewing and not horizontal viewing, hence the attribute **targetScreenOrientation** value equals "Portrait". Horizontal viewing when the aspect ratio equals 1:1 is a decoding preference used for selection a second video Adaptation set element (second video stream).

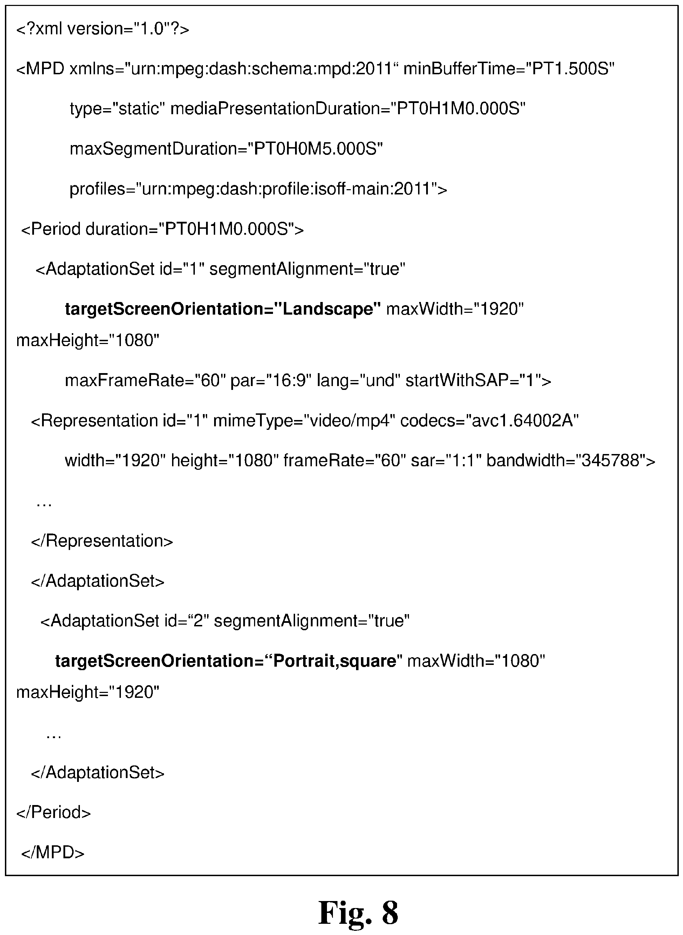

In one exemplary embodiment, illustrated in **Figure 8****,** an Adaptation Set element of the modified MPD may comprises an attribute **targetScreenOrientation** equals to more than one value.

In **Figure 8****,** a first Adaptation Set element with an identifier **id** equals to 1 corresponds to a video stream with an aspect ratio equals to 1080 rows over 1920 columns (height/width). The attribute **targetScreenOrientation** equals 'Landscape". A second Adaptation Set element with an identifier **id** equals to 2 corresponds to a video stream with an aspect ratio equals to 1080 rows over 1080 columns (height/width). The attribute **targetScreenOrientation** equals "Portrait" and "square".

Then, an intended screen orientation associated with said second Adaptation Set element (first video stream) suits a current orientation of the screen 121 equals to "Portrait" or "Square".

In one exemplary embodiment of step 412, the syntax structure is an Essential or Supplementary Property Descriptor.

An Essential or Supplemental Property is an additional signaled information that can be placed at a different level in a MPD. The purpose of the property is defined by the attribute called **schemeldUri.**

In the present invention, the value of the attribute **schemeldUri** can be defined as "urn:mpeg:dash:target-screen-orientation:2023" and the values of the value attribute are the same values as defined for the Adaptation Set element.

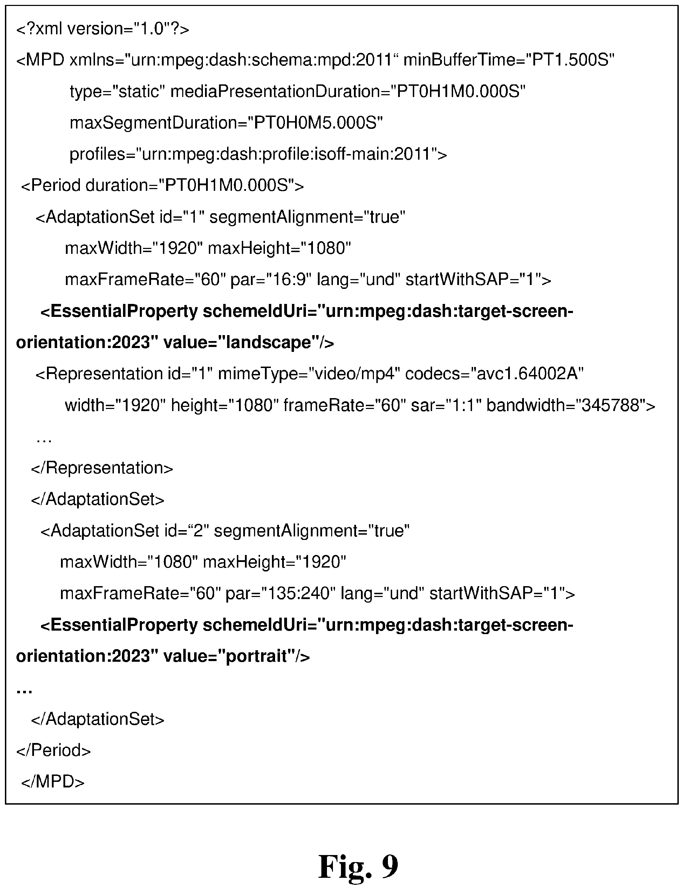

**Figure 9** shows the modified MPD in accordance with an exemplary embodiment of the present invention.

In **Figure 9****,** a first Essential Property with the **schemeldUri** attribute value equal to "urn:mpeg:dash:target-screen-orientation:2023" is added in the modified MPD whose value attribute is equal to "landscape" and a second Essential Property with the **schemeldUri** attribute value equal to "urn:mpeg:dash:target-screen-orientation:2023" is added in the modified MPD whose value attribute is equal to "portrait".

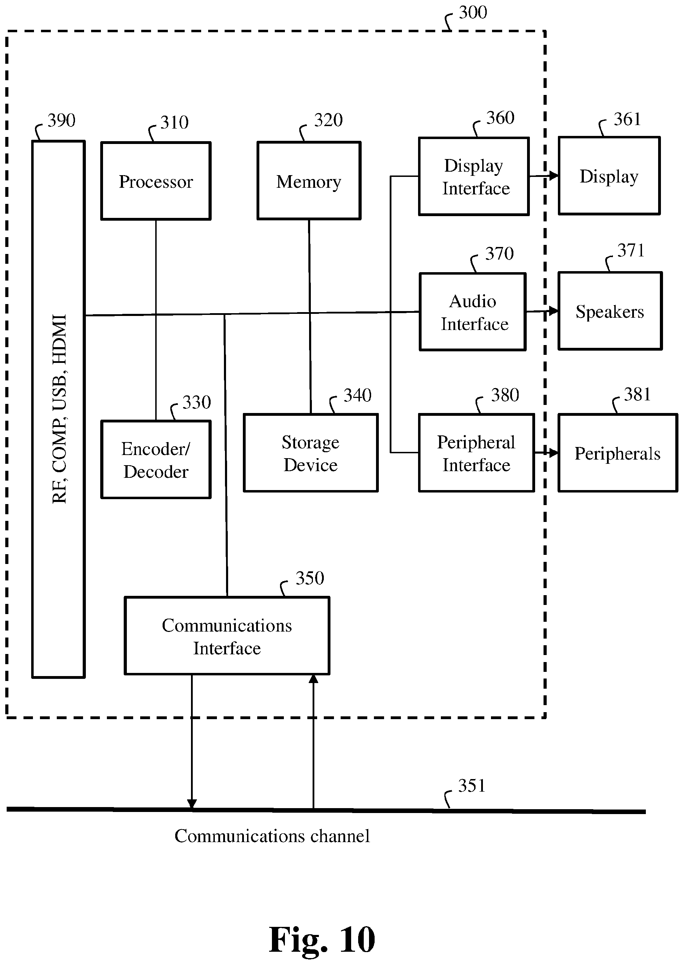

**Figure 10** shows a schematic block diagram illustrating an example of a system 300 in which various aspects and exemplary embodiments are implemented.

System 300 may be embedded as one or more devices including the various components described below. In various exemplary embodiments, system 300 may be configured to implement one or more of the aspects described in the present application.

Examples of equipment that may form all or part of the system 300 include personal computers, laptops, smartphones, tablet computers, digital multimedia set top boxes, digital television receivers, personal video recording systems, connected home appliances, connected vehicles and their associated processing systems, head mounted display devices (HMD, seethrough glasses), projectors (beamers), "caves" (system including multiple displays), servers, video encoders, video decoders, post-processors processing output from a video decoder, pre-processors providing input to a video encoder, web servers, video servers (e.g. a broadcast server, a videoon-demand server or a web server), still or video camera, encoding or decoding chip or any other communication devices. Elements of system 300, singly or in combination, may be embodied in a single integrated circuit (IC), multiple ICs, and/or discrete components. For example, in at least one exemplary embodiment, the processing and encoder/decoder elements of system 300 may be distributed across multiple ICs and/or discrete components. In various exemplary embodiments, system 300 may be communicatively coupled to other similar systems, or to other electronic devices, via, for example, a communications bus or through dedicated input and/or output ports.

System 300 may include at least one processor 310 configured to execute instructions loaded therein for implementing, for example, the various aspects described in the present application. Processor 310 may include embedded memory, input output interface, and various other circuitries as known in the art. System 300 may include at least one memory 320 (for example a volatile memory device and/or a non-volatile memory device). System 300 may include a storage device 340, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 340 may include an internal storage device, an attached storage device, and/or a network accessible storage device, as non-limiting examples.

System 300 may include an encoder/decoder module 330 configured, for example, to process data to provide encoded/decoded video picture data, and the encoder/decoder module 330 may include its own processor and memory. The encoder/decoder module 330 may represent module(s) that may be included in a device to perform the encoding and/or decoding functions. As is known, a device may include one or both encoding and decoding modules. Additionally, encoder/decoder module 330 may be implemented as a separate element of system 300 or may be incorporated within processor 310 as a combination of hardware and software as known to those skilled in the art.

Program code to be loaded onto processor 310 or encoder/decoder 330 to perform the various aspects described in the present application may be stored in storage device 340 and subsequently loaded onto memory 320 for execution by processor 310. In accordance with various exemplary embodiments, one or more of processor 310, memory 320, storage device 340, and encoder/decoder module 330 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 310 and/or the encoder/decoder module 330 may be used to store instructions and to provide working memory for processing that may be performed during encoding or decoding.

In other exemplary embodiments, however, a memory external to the processing device (for example, the processing device may be either the processor 310 or the encoder/decoder module 330) may be used for one or more of these functions. The external memory may be the memory 320 and/or the storage device 340, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 300 may be provided through various input devices as indicated in block 390. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 390 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 300 to other electronic devices across USB and/or HDMI connections. It is to be understood that various aspects of input processing, for example, Reed-Solomon error correction, may be implemented, for example, within a separate input processing IC or within processor 310 as necessary. Similarly, aspects of USB or HDMI interface processing may be implemented within separate interface ICs or within processor 310 as necessary. The demodulated, error corrected, and demultiplexed stream may be provided to various processing elements, including, for example, processor 310, and encoder/decoder 330 operating in combination with the memory and storage elements to process the data stream as necessary for presentation on an output device.

Various elements of system 300 may be provided within an integrated housing. Within the integrated housing, the various elements may be interconnected and transmit data therebetween using suitable connection arrangement 390, for example, an internal bus as known in the art, including the I2C bus, wiring, and printed circuit boards.

The system 300 may include communication interface 350 that enables communication with other devices via communication channel 351. The communication interface 350 may include, but is not limited to, a transceiver configured to transmit and to receive data over communication channel 351. The communication interface 350 may include, but is not limited to, a modem or network card and the communication channel 351 may be implemented, for example, within a wired and/or a wireless medium.

Data may be streamed to system 300, in various exemplary embodiments, using a Wi-Fi network such as IEEE 802.11. The Wi-Fi signal of these exemplary embodiments may be received over the communications channel 351 and the communications interface 350 which are adapted for Wi-Fi communications. The communications channel 351 of these exemplary embodiments may be typically connected to an access point or router that provides access to outside networks including the Internet for allowing streaming applications and other over-the-top communications.

Other exemplary embodiments may provide streamed data to the system 300 using a set-top box that delivers the data over the HDMI connection of the input block 390.

Still other exemplary embodiments may provide streamed data to the system 300 using the RF connection of the input block 390.

The streamed data may be used as a way for signaling information used by the system 300. The signaling information may comprise a bitstream and/or information such a number of pixels of a video picture, any coding/decoding setup parameters, an alignment status, alignment reference data, overlap status, resampling data, interpolation data, and/or calibration data.

It is to be appreciated that signaling may be accomplished in a variety of ways. For example, one or more syntax elements, flags, and so forth may be used to signal information to a corresponding decoder in various exemplary embodiments.

System 300 may provide an output signal to various output devices, including a display (screen) 361, speakers 371, and other peripheral devices 381. The other peripheral devices 381 may include, in various examples of exemplary embodiments, one or more of a stand-alone DVR, a disk player, a stereo system, a lighting system, and other devices that provide a function based on the output of system 300.

In various exemplary embodiments, control signals may be communicated between the system 300 and the display 361, speakers 371, or other peripheral devices 381 using signaling such as AV.Link (Audio/Video Link), CEC (Consumer Electronics Control), or other communications protocols that enable device-to-device control with or without user intervention.

The output devices may be communicatively coupled to system 300 via dedicated connections through respective interfaces 360, 370, and 380.

Alternatively, the output devices may be connected to system 300 using the communications channel 351 via the communications interface 350. The display 361 and speakers 371 may be integrated in a single unit with the other components of system 300 in an electronic device such as, for example, a television.

In various exemplary embodiments, the display interface 360 may include a display driver, such as, for example, a timing controller (T Con) chip.

The display 361 and speaker 371 may alternatively be separate from one or more of the other components, for example, if the RF portion of input 390 is part of a separate set-top box. In various exemplary embodiments in which the display 361 and speakers 371 may be external components, the output signal may be provided via dedicated output connections, including, for example, HDMI ports, USB ports, or COMP outputs.

In **Figures 1-10****,** various methods are described herein, and each of the methods includes one or more steps or actions for achieving the described methods. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium, such as storage device 340 **(****Figure 10****)** for instance. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, seethrough glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 310 or by hardware, or by a combination of hardware and software. As a non-limiting example, the exemplary embodiments may be also implemented by one or more integrated circuits. The memory 320 may be of any type appropriate to the technical environment and may be implemented using any appropriate data storage technology, such as optical memory devices, magnetic memory devices, semiconductor-based memory devices, fixed memory, and removable memory, as non-limiting examples. The processor 310 may be of any type appropriate to the technical environment, and may encompass one or more of microprocessors, general purpose computers, special purpose computers, and processors based on a multi-core architecture, as non-limiting examples.

As will be apparent to one of ordinary skill in the art based on the present application, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment.

Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiments/examples/implementations necessarily mutually exclusive of other exemplary embodiments/examples/implementations.

Reference numerals appearing in the claims are by way of illustration only and shall have no limiting effect on the scope of the claims. Although not explicitly described, the present exemplary embodiments/examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video sequence (including possibly a received bitstream which encodes one or more video sequences) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application.

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video sequence in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method (400) of playing video streams according to a current orientation of a device's screen, wherein the method comprises:
- obtaining (410) a set of first video streams, each first video stream being associated with an intended screen orientation and each first video stream can be decoded by decoding means of the device;
- obtaining (420) a set of second video streams from the set of first video streams, each second video stream being a first video stream whose associated intended screen orientation suits the current orientation of the device's screen;
- selecting (430) one second video stream from the set of second video streams based on device characteristics and/or decoding preferences;
- playing (440) the selected second video stream.

2. The method of claim 1, wherein the method further comprises requesting (411) the current device's screen orientation.

3. The method of claim 1 or 2, wherein the selected second video stream is a second video stream of the set of second video streams having a minimal difference between its aspect ratio of its dimensions and the aspect ratio of the dimensions of the device's screen.

4. The method of one of previous claims, wherein the method further comprises:
- obtaining (450) a new orientation of the device's screen that is different of the current orientation of the device's screen;
- obtaining (460) a set of third video streams from the set of first video streams, each third video stream being a first video stream whose associated intended screen orientation suits the new orientation of the device's screen;
- selecting (470) one third video stream from the set of third video streams based on device characteristics and/or decoding preferences; switching (480) to the selected third video stream at a new switching point and playing (490) the selected third video stream.

5. The method of claim 4, wherein switching (480) to the selected third video stream at a new switching point and playing (490) the selected third video stream are executed if the selected third video stream is different of the selected second video stream, otherwise the selected second video stream is played.

6. The method of one of previous claims, wherein the set of first video streams is obtained from a manifest file describing at least two alternative first video streams of a same video content, the at least two alternative video streams being produced with different intended screen orientation.

7. The method of one of previous claims, wherein an intended screen orientation suits a current or new landscape orientation of the device's screen when the intended screen orientation is a landscape orientation, an intended screen orientation suits a current or new portrait orientation of the device's screen when the intended screen orientation is a portrait orientation, an intended screen orientation suits a current or new orientation of the device's screen defined for a square screen when the device has a square screen.

8. The method of one previous claims, wherein the method further comprises parsing (412) a syntax structure of a manifest file to obtain an intended screen orientation associated with a first video stream.

9. The method of claim 8, wherein the syntax structure is either an attribute of an Adaptation Set element of a Media Presentation Descriptor or an Essential of Supplemental Property within an Adaptation Set element of a Media Presentation Descriptor.

10. The method of claim 9, wherein the syntax structure is used by either a HTTP-based Adaptation Streaming client or by a Dynamic Adaptative Streaming over HTTP (DASH) client.

11. The method of one of claims 5 to 10, wherein obtaining (450) the new orientation of the device's screen that is different of the current orientation of the device's screen comprises transmitting said new orientation of the device's screen to a remote device (13) and receiving video streams to be played from said remote device (13).

12. A manifest file formatted to include intended screen orientations associated with a set of first video streams used by a method of one of claims 1 to 11 for playing one of said first video stream.

13. A computer program product including instructions which, when the program is executed by one or more processors, causes the one or more processors to carry out a method claimed in any one of claims 1 to 11.

14. A non-transitory storage medium carrying instructions of program code for executing a method claimed in any one of claims 1 to 11.

15. A video streaming device (12) comprising:
- a screen (121) ;
- an orientation sensor (122) intended to obtain a current orientation of the screen and to detect a change of said screen orientation ;
- means (123) for receiving streamed video segments of video streams; and
- means (124) for performing the method claimed in any one of claims 1 to 11.

16. The video streaming device (12) of claim 13, wherein the means (124) for performing one of the method claimed in any one of claims 1 to 11 are embedded in a remote device (13) and the video streaming device (12) further comprises means (125) for transmitting orientation of its screen to said remote device (13) and for receiving video streams to be played from said remote device (13).

17. A system of playing a video stream according to a current orientation of a device's screen, wherein the system comprises:
- a video streaming device (12) according to claim 15 or 16 ; and
- a video streaming server (11) comprising means (111) for storing video segments of video streams.
